# EUROPÄISCHE PATENTSCHRIFT

(11) **EP 1 245 932 B1**
(45) Veröffentlichungstag und Bekanntmachung des Hinweises auf die Patenterteilung: **14.12.2005**
(21) Anmeldenummer: 02005082.9
(22) Anmeldetag: 07.03.2002
(51) Int. Cl.: G01D 5/347

(54) **Winkelmessgerät und dessen Verwendung**
Angle measuring device and the use thereof
Appareil de mesure d'angle et son utilisation

(30) Priorität: 28.03.2001 DE 10115549
(43) Veröffentlichungstag der Anmeldung: 02.10.2002
(73) Patentinhaber: Dr. Johannes Heidenhain GmbH, 83292 Traunreut (DE)
(72) Erfinder: Mitterreiter, Johann, 83339 Chieming (DE); Lahr, Johann, 83374 Traunwalchen (DE); Richter, Dietmar, 83308 Trostberg (DE)

(56) Entgegenhaltungen:
- PATENT ABSTRACTS OF JAPAN Bd. 1997, Nr. 11, 28. November 1997 (1997-11-28) & JP 09 178513 A (FUJITSU TEN LTD), 11. Juli 1997 (1997-07-11)
- PATENT ABSTRACTS OF JAPAN Bd. 015, Nr. 032 (M-1073), 25. Januar 1991 (1991-01-25) & JP 02 271107 A (MATSUSHITA ELECTRIC IND CO LTD), 6. November 1990 (1990-11-06)

## Beschreibung

Die Erfindung betrifft ein Winkelmessgerät mit zwei relativ zueinander verdrehbaren Bauteilen. Ebenso bezieht sich die Erfindung auf die Verwendung dieses Gerätes bei Werkzeugmaschinen beziehungsweise Bearbeitungszentren oder Druckmaschinen.

Derartige Winkelmessgeräte dienen zur Messung von Drehbewegungen einer Welle über eine oder mehrere Umdrehungen. Die Drehbewegung wird dabei entweder inkremental oder absolut erfasst, der ausgegebene Messwert ist abhängig davon eine Folge von Zählimpulsen ein Zählerwert oder ein Codewort. In Verbindung mit Zahnstangen oder Gewindespindeln lassen sich mit derartigen Winkelmessgeräten auch lineare Bewegungen messen. Winkelmessgeräte werden insbesondere bei Werkzeugmaschinen beziehungsweise Bearbeitungszentren sowohl für die Messung von linearen als auch rotatorischen Bewegungen eingesetzt. Die Bestimmung der Drehwinkel auf nur wenige Winkelsekunden genau ist beispielsweise für Rundtische oder Schwenkköpfe von Werkzeugmaschinen, C-Achsen von Drehmaschinen aber auch bei Druckwerken von Druckmaschinen von entscheidender Bedeutung. Derartige Winkelmessgeräte werden häufig an Stellen eingesetzt, wo vergleichsweise raue Umgebungsbedingen vorherrschen. So ist das eindringen von Schmieröl oder Kühlflüssigkeit eine häufige Ausfallursache von Winkelmessgeräten im Betrieb an Werkzeugmaschinen beziehungsweise Bearbeitungszentren.

In der Offenlegungsschrift JP 9178513 A ist ein Winkelmessgerät offenbart, welches am Rotor einen Flansch aufweist, so dass ein Spalt zwischen diesem Flansch und Statorteil entsteht. Durch das Vorsehen von Rillen im Flansch sollen im Betrieb durch die Fliehkraft feste Partikel aus dem Spalt gefördert werden.

Dieses bekannte Winkelmessgerät weist den Nachteil auf, dass die Stirnfläche des Stators nicht dazu geeignet ist, einerseits stehende Flüssigkeit von der Dichtung fernzuhalten und andererseits gleichzeitig als Anbaufläche zu dienen. Hinzu kommt, dass das zur Verfügung stehende Bauvolumen für das Statorgehäuse nicht optimal ausgenutzt wird.

Der Erfindung liegt daher die Aufgabe zugrunde, ein Winkelmessgerät zu schaffen, in das keine Flüssigkeit aus der Umgebung eindringt.

Diese Aufgabe wird durch ein Winkelmessgerät gemäß Anspruch 1 gelöst.

Das erfindungsgemäße Winkelmessgerät soll bei drehbaren Elementen von Werkzeugmaschinen beziehungsweise Bearbeitungszentren oder Druckmaschinen verwendet werden, insbesondere bei Rundtischen von Werkzeugmaschinen, dies ist im Anspruch 7 angegeben.

Vorteilhafte Ausführungsformen des erfindungsgemäßen Winkelmessgerätes ergeben sich aus den Maßnahmen in den von Anspruch 1 abhängigen Ansprüchen.

Demnach besteht das Winkelmessgerät aus einem innenliegenden Bauteil und einem außenliegenden Bauteil, welches das innenliegende mit Vorteil über den Umfang völlig umschließt. Häufig wird das innenliegende Bauteil als Rotor, insbesondere als drehbare Hohlwelle ausgestaltet. Das außenliegende Bauteil ist dann als Stator ausgeführt, dessen flanschartig gestaltetes Gehäuseteil in einer bevorzugten Ausführung gleichzeitig als Anbaufläche beispielsweise an einen Rundtisch einer Werkzeugmaschine dient.

Das Winkelmessgerät kann bedingt durch diese Bauform einfach und präzise an eine vorgesehene Anbaufläche montiert werden. Darüber hinaus kann durch die erfindungsgemäße Vorrichtung eine gute Volumenausnutzung des Gehäuses sichergestellt werden. Hinzu kommt, dass durch die erfindungsgemäße Bauweise die Dichtung und gegebenenfalls das Wellenende bezüglich der Stirnseite des Statorgehäuses zurückgesetzt und damit weitgehend vor mechanischen Außeneinflüssen geschützt ist.

Weitere Vorteile, sowie Einzelheiten des erfindungsgemäßen Verfahrens ergeben sich aus der nachfolgenden Beschreibung eines möglichen Ausführungsbeispieles anhand der beiliegenden Figuren. In dem unten beschriebenen Ausführungsbeispiel besteht das Gehäuse des Winkelmessgerätes aus einem Stahlteil und einem Aluminiumteil. Es ist selbstverständlich, dass die Erfindung nicht auf diese Werkstoffauswahl beschränkt ist, vielmehr ist festzuhalten, dass sich die Erfindung auf eine Bauform eines Winkelmessgerätes, beziehungsweise auf dessen Verwendung gemäß den Patentansprüchen bezieht und nicht auf die Werkstoffauswahl eines seiner Bauteile. Insbesondere für das Gehäuse ist die Verwendung von anderen Werkstoffen, etwa aus der Gruppe der Kunststoffe durchaus üblich.

Es zeigen
- Figur 1: eine Längsschnittdarstellung durch ein Winkelmessgerät;
- Figur 2: eine Draufsicht auf den Stahlflansch als Anbaufläche des Winkelmessgerätes;
- Figur 3: eine teilweise geschnittene Seitenansicht eines Winkelmessgerätes eingebaut an einem Rundtisch.

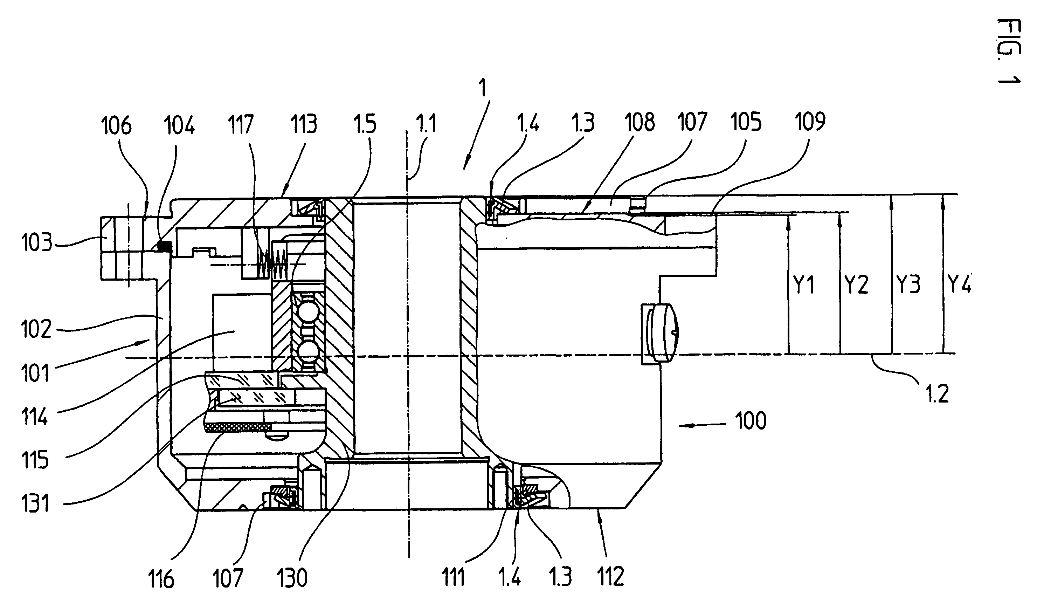

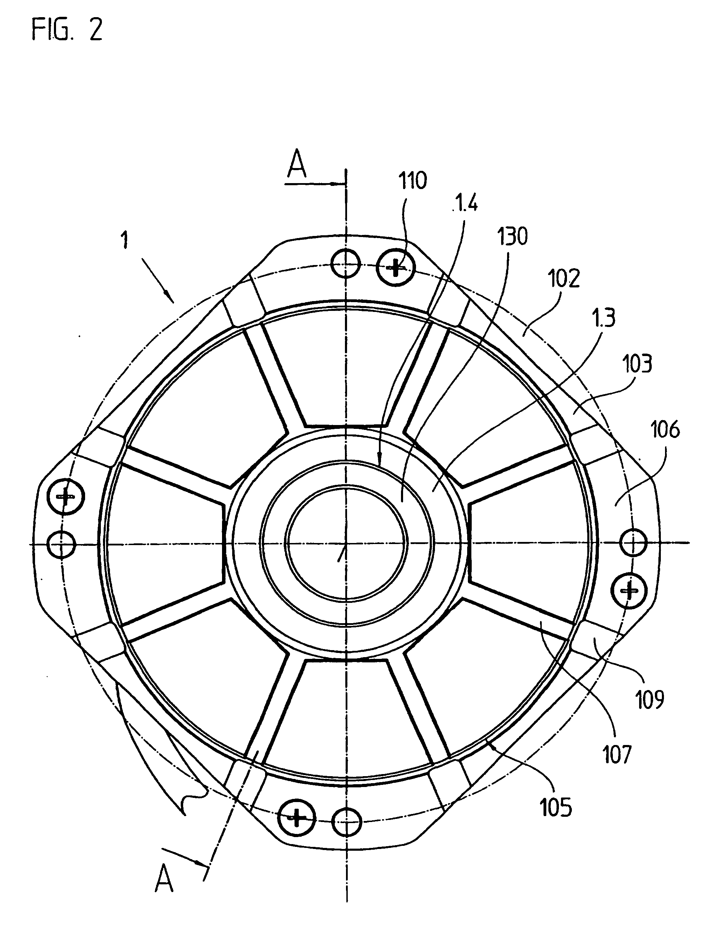

Gemäß den Figuren 1 und 2 besteht das Winkelmessgerät 1 aus einem au-ßenliegendem Stator 100 und einem innenliegendem Rotor 130. Der Stator 100 umfasst ein Statorgehäuse 101, welches zweigeteilt ist und aus einer Aluminiumkappe 102 und einem Stahlflansch 103 besteht. Sowohl die Aluminiumkappe 102 als auch der Stahlflansch 103 weisen jeweils eine Stirnseite 112 beziehungsweise 113 auf. Das Statorgehäuse 101 dient zum einen dazu die messtechnischen Einrichtungen des Winkelmessgerätes gegen äußere Einflüsse zu schützen. Zu diesem Zweck ist es entsprechend stabil ausgeführt. Die Aluminiumkappe 102 und der Stahlflansch 103 werden mit Hilfe von Schrauben, die in die Flanschbohrungen 110 eingeführt werden gegeneinander verschraubt, wobei die Fügefläche zwischen der Aluminiumkappe 102 und dem Stahlflansch 103 mit einem O-Ring 104 abgedichtet wird. Darüber hinaus sind in dem Spaltring zwischen dem Rotor 130 und den beiden Stirnseiten 112 und 113 des Statorgehäuses 101 V-Dichtungen 1.3 vorgesehen. Damit die Dichtlippe der entsprechenden V-Dichtung 1.3 nicht in die Aluminiumkappe 102 einlaufen kann, wurde dort am Berührumfang ein vergleichsweise härterer Stahlring 111 eingesetzt.

Die messtechnischen Einrichtungen des Winkelmessgerätes 1 umfassen eine Teilungsscheibe 131 mit einer Winkelteilung, die drehfest durch Kleben am Rotor 130 befestigt ist, eine Abtasteinheit 114 mit einer Abtastplatte 115, die mittels Kugellagern 1.5 auf dem Rotor 130 gelagert ist. Die Abtasteinheit 114 tastet mittels einer Lampe und einem Kondensor sowie der Abtastplatte 115 und Fotoelementen auf einer Leiterplatte 119 die Winkelteilung der Teilungsscheibe 131 ab. Die fotoelektrisch erzeugten Signale werden durch elektronische Bauteile auf einer Leiterplatte 116 weiterverarbeitet.

Darüber hinaus befindet sich innerhalb des Statorgehäuses 101 auch die Kupplung 117. Die Kupplung 117 hat die Aufgabe, dass einerseits eine drehsteife Verbindung zwischen Abtasteinheit 114 und Statorgehäuse 101 hergestellt wird, und andererseits unvermeidbare Exzentrizitäten und Winkelfluchtungsfehler ausgleicht. An dieser Stelle kann auch auf den Offenbarungsgehalt der EP 0087521 B1 der Anmelderin verwiesen werden.

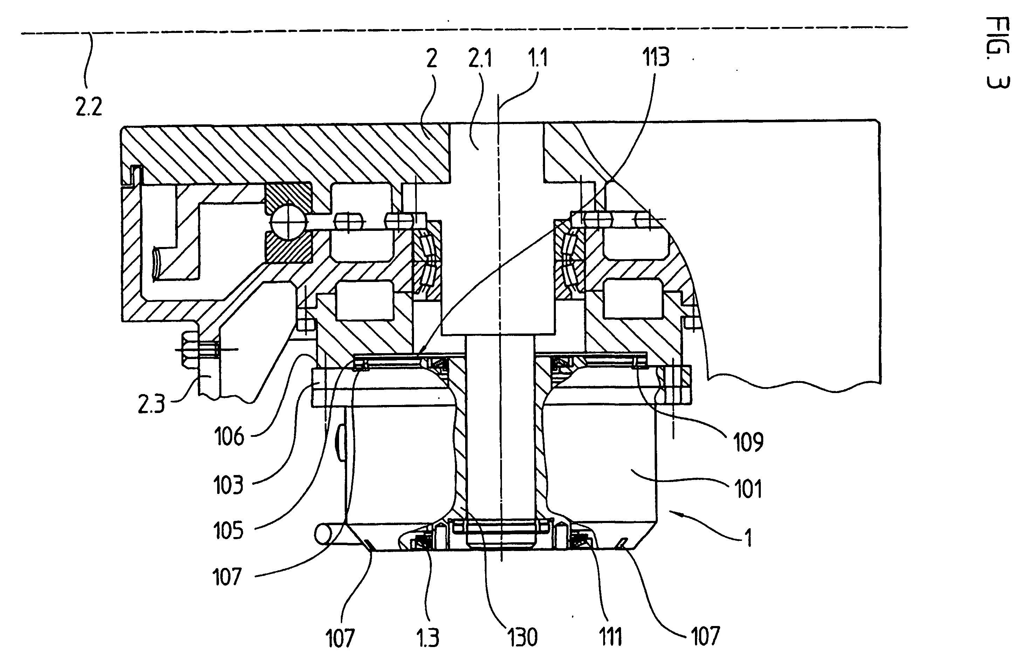

Neben der oben erläuterten Schutzfunktion hat das Statorgehäuse 101 auch die Aufgabe einen passgenauen Anbau an einen Rundtisch 2 (siehe Figur 3) zu gewährleisten. Aus diesem Grund sind am Stahlflansch 103 des Statorgehäuses 101 bearbeitete Flächen, nämlich ein Zentrierbund 105 und eine Anschlagfläche 106 vorgesehen.

Sowohl die Aluminiumkappe 102 als auch der Stahlflansch 103 weisen radial nach außen gerichtete Kanäle 107 auf, welche die Flüssigkeiten nach außen hin ableiten können. Die V-Dichtung 1.3 ist so angeordnet, dass diese gegenüber den erhöhten Zwischenbereichen der Stirnseiten 112 beziehungsweise 113, die zwischen den Kanälen 107 sind, nicht hervorsteht. Dadurch ist die am Rotor 130 befestigte V-Dichtung 1.3 durch den Stahlflansch 103 beziehungsweise durch die Aluminiumkappe 102 vor äußeren mechanischen Einflüssen gut geschützt. Darüber hinaus kann das Bauvolumen zwischen den Kanälen 107 innerhalb des Statorgehäuses 101 für die Unterbringung von Elementen die zur messtechnischen Einrichtung oder den dazugehörigen Auswerteelementen beispielsweise elektronischen Bauteilen gehören genutzt werden. Mit der vorgestellten Bauweise kann also sowohl die Erhöhung der Dichtigkeit des Winkelmessgerätes 1 als auch eine optimierte Ausnutzung des Bauvolumens erreicht werden.

Der Rotor 130 ist um die Drehachse 1.1 drehbar gelagert und zur Aufnahme einer Welle 2.1 des Rundtisches 2 (siehe Figur 3) entsprechend als Hohlwelle ausgestaltet. Am Rotor 130 sind, wie bereits oben erwähnt, die Teilungsscheibe 131 sowie die Kugellager 1.5 befestigt. Ebenso sind am Rotor 130 die beiden V-Dichtungen 1.3 drehfest angebracht, so dass im Betrieb des Winkelmessgerätes 1 zwischen Rotor 130 und V-Dichtung 1.3 keine Relativbewegung möglich ist.

Alternativ dazu kann aber auch die V-Dichtung 1.3 am Statorgehäuse 101 fixiert sein. Die Bauart mit der am Rotor 130 festgemachten V-Dichtung 1.3 hat allerdings gegenüber einer nicht rotierenden V-Dichtung 1.3 den Vorteil, dass die Flüssigkeit auf der V-Dichtung 1.3 durch die Fliehkräfte radial nach außen bewegt wird. Darüber hinaus ist die Erfindung selbstverständlich nicht auf V-Dichtungen eingeschränkt. Ersatzweise kann hier jede beliebige geeignete Bauform einer Wellendichtung, wie etwa eine Labyrinth-Dichtung oder ein O-Ring verwendet werden.

Im Betrieb 1 kann das Winkelmessgerät in verschiedensten Arbeitspositionen positioniert werden. So kann beispielsweise der Stahlflansch 103 so ausgerichtet sein, dass dessen Stirnseite 113 horizontal und nach oben weisend zu liegen kommt. Wenn nun Kühlflüssigkeit von oben her auf den Stahlflansch 103 fließt, kann diese durch die Kanäle 107 radial nach außen ablaufen, ohne dass die V-Dichtung 1.3 vollständig von der Kühlflüssigkeit bedeckt ist. Diese Anordnung steigert die Dichtigkeit des Winkelmessgerätes 1 erheblich.

Ebenso ist ein zuverlässiger Betrieb im Hinblick auf die Dichtheit des Winkelmessgerätes 1 auch in einer um 180° gegenüber der zuvor beschriebenen Ausrichtung gedrehten Betriebslage möglich. In diesem Fall kommen die Kanäle 107 in der Stirnseite 112 der Aluminiumkappe 102 zur Wirkung.

In dem gezeigten Beispiel sind die Kanäle 107 als Rillen ausgeführt. Es sind aber auch alle anderen Formen für die Kanäle 107 möglich. Zum Beispiel können diese auch als im Wesentlichen radiale Bohrungen oder aber auch als großflächig gestaltete Bereiche ausgebildet sein, die aus den Stirnseiten 112 beziehungsweise 113 herausgearbeitet wurden. Ebenso können die Kanäle 107 auch als Ausnehmungen in separaten beigelegten Elementen, etwa ringförmige Scheiben, die auf der Stirnseite 112 beziehungsweise 113 aufliegen ausgeführt sein.

Die Kanäle 107 können entweder, wie im gezeigten Beispiel an beiden Stirnseiten 112 und 113 des Statorgehäuses 101 vorgesehen sein oder aber nur an einer dieser beiden Stirnseiten 112 oder 113.

Zur Vereinfachung der weiteren Beschreibung der Erfindung wird im Folgenden ein Mittenquerschnitt 1.2 als Bezugsebene eingeführt. Der Mittenquerschnitt 1.2 ist diejenige Fläche, die rechtwinklig zur Drehachse 1.1 ausgerichtet ist und das Winkelmessgerät 1 mittig schneidet.

Wichtig ist es, dass der Abstand Y₂ zwischen dem Kanalgrund 108 und dem Mittenquerschnitt 1.2 stets kleiner ist als der Abstand Y₃ zwischen der Au-ßenkontur 1.4 der V-Dichtung 1.3 und dem Mittenquerschnitt 1.2. Als Außenkontur 1.4 der V-Dichtung 1.3 ist derjenige Bereich der V-Dichtung 1.3 zu verstehen, der den größten Abstand zum Mittenquerschnitt 1.2 aufweist. Wie in diesem Ausführungsbeispiel gezeigt, ist es besonders vorteilhaft, wenn eine Dichtlippe der jeweiligen V-Dichtung 1.3 dachziegelartig schräg angeordnet ist und auf dem Kanalgrund 108 aufliegt und darauf gleitet.

Es ist also besonders zweckmäßig, wenn der Dichtbereich sowohl rotorseitig als auch statorseitig bei nach oben weisender waagrechten Stirnseite (112 beziehungsweise 113) des Winkelmessgerätes 1 oberhalb oder auf der Höhe des Kanalgrundes 108 liegt, und keinesfalls unterhalb des Kanalgrundes 108. Unter Dichtbereich ist derjenige Bereich zu verstehen, an dem durch die Dichtung die Flüssigkeit effektiv zurückgehalten wird, beziehungsweise ab dem die Flüssigkeit in Richtung Innenraum des Gehäuses nicht weiter vordringen kann. Der Dichtbereich kann also kleiner sein als der Kontaktbereich. Im gezeigten Ausführungsbeispiel reicht der Kontaktbereich am Rotor 130 nahezu über den gesamten rotorparallelen Schenkel der V-Dichtung 1.3, damit der Kraftschluss zwischen Rotor 130 und V-Dichtung 1.3 über eine genügend große Kontaktfläche gewährleistet ist. Demgegenüber ist der Dichtbereich derjenige Umfangsbereich, ab dem die von außen kommende Flüssigkeit nicht mehr weiter am Rotor 130 entlang nach innen vordringen kann. Der Dichtbereicht ist demnach die äußerste Umfangslinie, an der die Dichtung eng am Rotor 130 anliegt. Statorseitig entspricht im gezeigten Beispiel der Dichtbereich der Berührlinie zwischen dem V-Dichtung 1.3 und dem Kanalgrund 108.

Demnach liegt in dem gezeigten Beispiel der Dichtbereich auf Seiten des Rotors 130 höher als der Kanalgrund 108, und der Dichtbereich auf der Seite des Stators liegt auf der Höhe des Kanalgrundes 108. Auf diese Weise wird die von oben kommende Flüssigkeit effektiv und sicher in den Kanal 107 abgeleitet, unterstützt von der Rotationsbewegung der V-Dichtung 1.3 mit den damit verbundenen Fliehkräften.

In der vorgestellten Ausführungsform ist der Abstand Y₄ zwischen der Stirnseite 112 beziehungsweise 113 wenige zehntel Millimeter größer als der Abstand Y₃ (dieser minimale Versatz ist in der Figur 1 nicht zu erkennen). Das heißt, dass die V-Dichtung 1.3 gegenüber der Stirnseite 112 beziehungsweise 113 zurückgesetzt eingebaut ist. Auf diese Weise ist mit Sicherheit gewährleistet, dass die V-Dichtung 1.3 im eingebauten Zustand nicht Teile des Rundtisches 2 berühren kann und somit in die V-Dichtung 1.3 keine undefinierten Kräfte eingeleiten werden können, die gegebenenfalls negative Auswirkungen auf die Dichtungsfunktion haben. Gemäß dem gezeigten Ausführungsbeispiel ist die Fortsetzung 109 des Kanals 107 im Bereich der Anschlagfläche 106 so ausgestaltet, dass dieser einen Abstand Y₁ aufweist, der kleiner ist als der Abstand Y₂. Im gezeigten Ausführungsbeispiel ist Y₁<Y₂<Y₃≤Y₄. Die Bezeichnung größter Abstand bedeutet in dieser Schrift, dass bei einer Kontur mit ortsabhängig unterschiedlich großen Abständen zum Mittenquerschnitt 1.2 derjenige Abstand relevant ist, der am größten ist.

Die Figur 3 zeigt die Anbausituation des Winkelmessgerätes 1 an einen Rundtisch 2 einer Werkzeugmaschine. Die Welle 2.1 des Rundtisches 2 ist drehfest mit dem Rotor 130 des Winkelmessgerätes 1 verbunden. Demgegenüber ist das Statorgehäuse 101 am Gestell 2.3 befestigt, so dass sich dieses nicht um die Drehachse 1.1 drehen kann. Allerdings kann das gesamte Winkelmessgerät 1 um die Schwenkachse 2.2 gedreht werden. In der Figur 3 ist der Stahlflansch 103 in einer waagrechten Betriebsstellung mit der Stirnseite 113 nach oben dargestellt. Das Winkelmessgerät 1 kann mit Hilfe des Zentrierbundes 105 mittig montiert werden. Darüber hinaus wird durch die Anschlagfläche 106 gewährleistet, dass der Rotor 130 weitgehend achsparallel zur Welle 2.1 ausgerichtet ist. Die beiden Anbauflächen 105 und 106 ermöglichen also eine passgenaue Montage innerhalb der erforderlichen Toleranzen bzw. Genauigkeiten. Durch die Fortsetzung 109 der Kanäle 107 auch außerhalb des Zentrierbundes 105 kann die Flüssigkeit im eingebauten Zustand des Winkelmessgerätes 1 ganz nach außen jenseits des Zentrierbundes 105 sicher entweichen.

## Patentansprüche

1. Winkelmessgerät (1) mit einem, auf die Radialrichtung der Drehachse (1.1) bezogen, außenliegenden Bauteil (100) und einem innenliegenden Bauteil (130), wobei die Bauteile (100;130) relativ zueinander um die Drehachse (1.1) verdrehbar sind, und mindestens einer Dichtung (1.3) zwischen diesen Bauteilen (100;130),
**dadurch gekennzeichnet, dass** mindestens eine Stirnseite (112;113) des außenliegenden Bauteiles (100) mindestens einen von der Dichtung (1.3) radial nach außen führenden bezüglich der Stirnseite (112;113) tiefer liegenden Kanal (107) aufweist, wobei die Dichtung (1.3) derart angeordnet ist, dass der Abstand (Y₂) zwischen Kanalgrund (108) und Mittenquerschnitt (1.2) kleiner oder gleich dem Abstand (Y₃) zwischen Außenkontur (1.4) der Dichtung (1.3) und dem Mittenquerschnitt (1.2) ist.

2. Winkelmessgerät (1) nach Anspruch 1, **dadurch gekennzeichnet, dass** der größte Abstand (Y₄) zwischen Mittenquerschnitt (1.2) und der Außenkontur der Stirnseite (112;113) des außenliegenden Bauteiles (100) größer oder gleich dem Abstand (Y₃) zwischen Mittenquerschnitt (1.2) des Winkelmessgerätes (1) und Außenkontur (1.4) der Dichtung (1.3) ist.

3. Winkelmessgerät (1) nach einem der Ansprüche 1 bis 2, **dadurch gekennzeichnet, dass** die Stirnseite (113) mindestens einen von der Dichtung (1.3) radial nach außen führenden bezüglich der Stirnseite (113) tiefer liegenden Kanal (107) und mindestens eine Fläche (105; 106) zum passgenauen Anbau an eine Maschine aufweist.

4. Winkelmessgerät (1) nach einem der Anspruche 1 bis 3, **dadurch gekennzeichnet, dass** die Dichtung (1.3) drehfest mit dem Rotor (130) verbunden ist.

5. Verwendung eines Winkelmessgerätes (1) gemäß Anspruch 1 an drehbaren Elementen (2) von Werkzeugmaschinen beziehungsweise Bearbeitungszentren oder Druckmaschinen, insbesondere an einem Rundtisch einer Werkzeugmaschine.

## Claims

1. Angle measuring device (1), having a component (100) which is external relative to the radial direction of the axis of rotation (1.1) and an internal component (130), the components (100; 130) being rotatable relative to each other about the axis of rotation (1.1), and having at least one gasket (1.3) between these components (100; 130), **characterised in that** at least one end side (112; 113) of the external component (100) has at least one channel (107) which is guided radially outwards from the gasket (1.3) and is situated lower relative to the end side (112; 113), the gasket (1.3) being disposed in such a manner that the spacing (Y₂) between the channel base (108) and the central cross-section (1.2) is smaller than or equal to the spacing (Y₃) between the outer contour (1.4) of the gasket (1.3) and the central cross-section (1.2).

2. Angle measuring device (1) according to claim 1, **characterised in that** the greatest spacing (Y₄) between the central cross-section (1.2) and the outer contour of the end side (112; 113) of the external component (100) is greater than or equal to the spacing (Y₃) between the central cross-section (1.2) of the angle measuring device (1) and the outer contour (1.4) of the gasket (1.3).

3. Angle measuring device (1) according to one of the claims 1 to 2, **characterised in that** the end side (113) has at least one channel (107) which is guided radially outwards from the gasket (1.3) and is situated lower relative to the end side (113) and has at least one face (105; 106) for precise mounting on a machine.

4. Angle measuring device (1) according to one of the claims 1 to 3, **characterised in that** the gasket (1.3) is connected non-rotatably to the rotor (130).

5. Use of an angle measuring device (1) according to claim 1 on rotatable elements (2) of machine tools or respectively machining centres or printing presses, in particular on a turntable of a machine tool.

## Revendications

1. Appareil de mesure d'angle (1) avec, par rapport à la direction radiale de l'axe de rotation (1.1), un composant (100) situé vers l'extérieur et un composant (130) situé vers l'intérieur, ces composants pouvant tourner l'un par rapport à l'autre autour de l'axe (1.1) et présentant entre eux un joint d'étanchéité (1.3), **caractérisé en ce qu'**au moins une face frontale (112 ; 113) du composant (100) situé vers l'extérieur présente au moins un canal (107) conduisant du joint (1.3) radialement vers l'extérieur et situé, par rapport à la face frontale (112 ; 113), plus bas, ce joint d'étanchéité (1.3) étant disposé de manière que la distance (Y₂) entre le fond du canal (108) et la section transversale médiane (1.2) est au plus égale à la distance (Y₃) entre le contour externe (1.4) du joint d'étanchéité (1.3) et la section transversale médiane (1.2).

2. Appareil de mesure d'angle selon la revendication 1, **caractérisé en ce que** la plus grande distance (Y₄) entre la section médiane (1.2) et le contour externe de la face frontale (112 ; 113) du composant (100) situé à l'extérieur est au moins égale à la distance (Y₃) entre la section médiane (1.2) de l'appareil de mesure d'angle (1) et le contour externe (1.4) du joint d'étanchéité (1.3).

3. Appareil de mesure d'angle selon la revendication 1 ou 2, **caractérisé en ce que** la face frontale (113) présente au moins un canal (107) conduisant du joint d'étanchéité (1.3) radialement vers l'extérieur et situé, par rapport à cette face, plus bas, ainsi qu'au moins une portée (105 ; 106) pour montage avec ajustage serré sur une machine.

4. Appareil de mesure d'angle selon une des revendications 1 à 3, **caractérisé en ce que** le joint d'étanchéité (1.3) est solidaire en rotation du rotor (130).

5. Utilisation d'un appareil de mesure d'angle (1) selon la revendication 1 sur des éléments tournants (2) de machines-outils, des centres d'usinage ou des machines d'imprimerie, notamment sur une table circulaire d'une machine-outil.
